# EUROPEAN PATENT SPECIFICATION

(11) **EP 0 419 903 B1**
(45) Date of publication and mention of the grant of the patent: **14.12.1994**
(21) Application number: 90117110.8
(22) Date of filing: 05.09.1990
(51) Int. Cl.: B29C 45/18, B29C 45/76, B29C 47/10, B29C 47/92

(54) **Raw material resin feeding system for a molding machine**
Rohkunststoffzufuhranlage für eine Formmaschine
Système d'alimentation en résine brute d'une machine de moulage

(30) Priority: 29.09.1989 JP 254865/89
(43) Date of publication of application: 03.04.1991
(73) Proprietor: MITSUBISHI JUKOGYO KABUSHIKI KAISHA, Tokyo (JP)
(72) Inventor: Kasai, Masayoshi, c/o Nagoya Technical Institute, Nakamura-ku, Nagoya-shi, Aichi-ken (JP); Kuroda, Hideo, c/o Nagoya Technical Institute, Nakamura-ku, Nagoya-shi, Aichi-ken (JP); Saito, Sensho, c/o Nagoya Machinery Works, Nakamura-ku, Nagoya-shi, Aichi-ken (JP)
(74) Representative: Henkel, Feiler, Hänzel & Partner

(56) References cited:
- PATENT ABSTRACTS OF JAPAN vol. 13, no. 13 (M-783)(3361) 12 January 1989 & JP-A-63 222 829 (SEKISUI CHEM CO LTD) 16 September 1988
- PATENT ABSTRACTS OF JAPAN vol. 12, no. 55 (M-669)(2902) 19 February 1988 & JP-A-62 201 217 (MITSUBISHI HEAVY IND LTD) 4 September 1987
- PATENT ABSTRACTS OF JAPAN vol. 11, no. 278 (M-623)(2725) 9 September 1987 & JP-A-62 077 913 (TOSHIBA MAC CO LTD) 10 April 1987
- PATENT ABSTRACTS OF JAPAN vol. 12, no. 289 (M-728)(3136) 8 August 1988 & JP-A-63 064 711 (UBE IND LTD) 23 March 1988
- PATENT ABSTRACTS OF JAPAN vol. 10, no. 40 (M-454)(2097) 18 February 1986 & JP-A-60 193 623 (MITSUBISHI JUKOGYO K.K.) 2 October 1985
- PATENT ABSTRACTS OF JAPAN vol. 6, no. 240 (M-174)(1118) 27 November 1982 & JP-A-57 138 927 (MITSUBISHI JUKOGYO K.K.) & JP-B-62 041 450 (...) 3 September 1987

## Description

### BACKGROUND OF THE INVENTION:

### Field of the Invention:

The present invention relates to a raw material feeding system available in an injection molding machine or an extruding molding machine, and more particularly to such type of raw material feeding system which is excellent in a color-change or resin-change (hereinafter called simply "color-change") performance, as set forth in the preamble of claim 1.

### Description of the Prior Art:

As a raw material feeding system having an improved color-change performance for use in an injection molding machine or an extrusion molding machine in the prior art, one example is disclosed in Japanese Patent Publication No. 62-41450 (1987), and in this system, as shown in Fig. 8, a shutter 8 is provided in the midway of a raw material passageway 9 in the raw material feeding system, and raw material resin is intermittently fed by controllably opening and closing this shutter.

In this figure, reference numeral 1 designates a screw, numeral 2 designates a cylinder, numeral 3 designates an end cap, numeral 4 designates an injection nozzle, numeral 5 designates a hydraulic motor for rotating the screw 1, numeral 6 designates a hopper for feeding raw material resin, numeral 7 designates an injection cylinder, and in the midway of a raw material passageway 9 of the same injection cylinder is provided a shutter 8 for opening and closing the raw material passageway 9 at predetermined timing as controlled by a controller not shown. It is to be noted that in this figure, reference numeral 10 designates a torpedo.

The screw 1 forms a feed section a, a compression section b, and a metering section c sequentially from its base end portion. The locations where old resin is most liable to remain and stay upon color-change, are an outer circumferential surface d of the torpedo 10, an inner wall surface e of the end cap 3, and an inner wall surface f of the nozzle 4. Here, the raw material feeding system implies the portion including the hopper 6, the shutter 8, the raw material passageway 9 and a shutter opening/closing mechanism not shown. It is to be noted that the raw material passageway 9 includes not only the portion of the cylinder 2 but also a cylindrical outlet portion of the hopper 6.

The method of color-change of the raw material being fed in the above-described raw material feeding system as disclosed in the above-referred Japanese patent publication consists of the following steps:
(1) At first, the raw material passageway 9 in the raw material feeding system is blocked by the shutter 8 to interrup feeding of old raw material that has been being fed, under this condition rotation of the screw 1 and injection are repeated to bring at least the feed section a and the compression section b of the screw 1 into a hollow condition (this is also called "hunger condition"), and also the raw material within the hopper 6 is replaced by new material.
(2) Next, the shutter 8 is opened and the screw 1 is rotated. At this time, the above-mentioned hollow section is filled with new unmolten resin.
(3) Under this condition, if rotation of the screw 1 is further continued, then to the resin staying sections d, e and f in the tip end portion of the screw 1 is fed molten resin having a higher viscosity than that at the time of steady operation, hence a resin pressure becomes high and the screw 1 retreats.
(4) When the screw 1 has retreated up to a metering stroke, rotation of the screw 1 is stopped, a hydraulic pressure is applied to the back pressure side of the cylinder 7, and the screw 1 advances to enter an injection step. At this time, molten resin having a high viscosity flows through the resin staying sections d, e and f, hence a large shearing force acts upon the wall surface of the resin passageway, and a scraping effect for old resin adhering to the wall surface is produced. By repeating these screw rotation and injection, as bounded by a check ring 11 provided within the tip end portion of the cylinder 2, in the upstream portion of the flow of resin, mainly by a scraping action caused by shearing forces exerted by a solid bed, while in the downstream portion of the same, by a scraping action caused by large shearing forces due to flow of high viscosity molten resin, removal of old resin adhered to the resin passageway, that is, color-change of resin proceed, and soon it reaches a steady state.
(5) However, under this newly established steady state, since temperatures at the respective portions would rise and a viscosity of resin would be lowered, the shearing forces acting upon the wall surface are reduced and the above-described effect becomes small, therefore, the shutter 8 is closed and again the above-described respective operations (1), (2) and (3) are carried out, and further these operations are effected repeatedly.

The above-described method of color-change in the prior art, in which feed of raw material resin within a hopper is once stopped and new unmolten resin is fed to a hollow space within a cylinder where old molten resin has been extracted, produces special advantages of reduction of consumed resin amount by 60% as compared to the conventional method in the prior art, in which color-change is effected simply by repeating rotation of a screw and injection after replacement of resin.

However, a shortcoming to be improved still remains in the above-described method of color-change in that a time necessitated for color-change is not so much different from the conventional method in the prior art. Its principal cause resides in that as a resin filling amount per one cycle in the above-described color-change operation steps (1) - (5) is too large, after it has reached the steady state, the necessary time for producing a hollow space to fill unmolten resin, that is, for discharging resin cannot be shortened.

JP-A-62-77913 discloses a system as defined in the preamble of claim 1. In this known system, at each color change plural ranges of the cylinder temperature are set up. At each range of the cylinder temperature predetermined times of plasticization and injection are performed. After beginning the feed of the new raw material, it is fed continuously into the plasticizing screw. The raw material becomes continuous in the screw.

JP-A-63-222829 discloses an automatic purging control in injection molding equipment, wherein purge condition in accordance with combination of materials is remembered and set up. In this known device, at each color change the new raw material resin is supplied continuously without intervalls.

### SUMMARY OF THE INVENTION:

The present invention has been worked out in order to resolve the above-mentioned problems in the prior art, and has it as an object to provide a raw material feeding system for a molding machine, in which a color-change time can be shortened while the above-described resin filling amount reduced to minimum for revealing a scraping effect to a maximum extent. According to the present invention, this object is solved by a system as claimed in claim 1.

According to another feature of the present invention, the discharge completion detector means consists of either injection start position detector means or a combination of the same injection start position detector means and time limit setting means using as a start point a screw position after completion of injection.

In essence, the characteristic feature of the present invention exists in that a small amount of unmolten resin is filled in a hollow portion of a screw a plurality of times, thereby a color-change work is carried out while maintaining the state having a large scraping effect, thus reduction of loss of resin is achieved and a necessary time is shortened.

In operation of the raw material feeding system according to the present invention, if a color-change command is issued from a main cycle of a controller, comparison is carried out in a judgement section of the color-change completion detector means, and since color-change has not yet done at this time, naturally the initial value of the signal issued from the color-change completion detector means is 0, hence a signal representing NO is output, and the raw material resin feed selection means stops feeding of raw material. However, even after feeding of raw material has been stopped, the injection cycle continues until the hollow space portion within the cylinder extends up to a predetermined length. The fact that the length of the hollow space portion has reached the predetermined length is determined by the color-change resin feed start detector means, and at this time, the first variable-color raw material resin is fed by a particular amount and injection is effected once or a plurality of times to discharge the resin within the cylinder. Whether this discharged amount has reached the particular feed amount or not is determined by particular filled amount discharge detector means, and these discharge cycles continue until the condition is fulfilled.

Completion of the above-described discharge is determined, for instance, depending upon whether or not the number of times of injection has reached a preset value. An input value for the condition of color-change completion is increased by one each time the discharge cycle is completed, and these cycles would continue until the value reaches a preset value, that is, until the particular amount of raw material resin is filled and discharged a predetermined number of times. If the above-mentioned input value reaches the preset value, the color-change is completed, and thereafter, the system is reset at a normal operation state and the operation returns to a normal molding cycle.

According to the present invention, since resin to be changed in color is fed to a screw little by little and thus color-change is effected always under the condition where a scraping effect by high viscosity resin is large, the following advantages are obtained:
(1) A necessary time for color-change is greatly shortened.
(2) An amount of resin consumed for color-change is reduced, and so, waste of material is decreased.
(3) Color-change and molding operations after color-change can be automated, and this results in improvements in productivity.

The above-mentioned and other objects, features and advantages of the present invention will become more apparent by reference to the following description of preferred embodiments of the invention taken in conjunction with the accompanying drawings.

### BRIEF DESCRIPTION OF THE DRAWINGS:

In the accompanying drawings:
Fig. 1 is a cross-section view of an essential part of an injection molding machine according to a first preferred embodiment of the present invention;
Fig. 2 is a flow chart of the present invention;
Fig. 3 is a cross-section view of an essential part of an injection molding machine according to a second preferred embodiment of the present invention;
Fig. 4 is a flow chart for a third preferred embodiment of the present invention;
Fig. 5 is a schematic view showing a flow model of a solid bed;
Fig. 6 is a diagram showing a shearing stress distribution model in a solid bed;
Fig. 7 is a diagram showing a shearing stress distribution model in molten resin; and
Fig. 8 is a cross-section view of an essential part of an injection molding machine in the prior art.

### DESCRIPTION OF THE PREFERRED EMBODIMENTS:

In the following, the present invention will be described in greater detail in connection to preferred embodiments illustrated in the accompanying drawings.

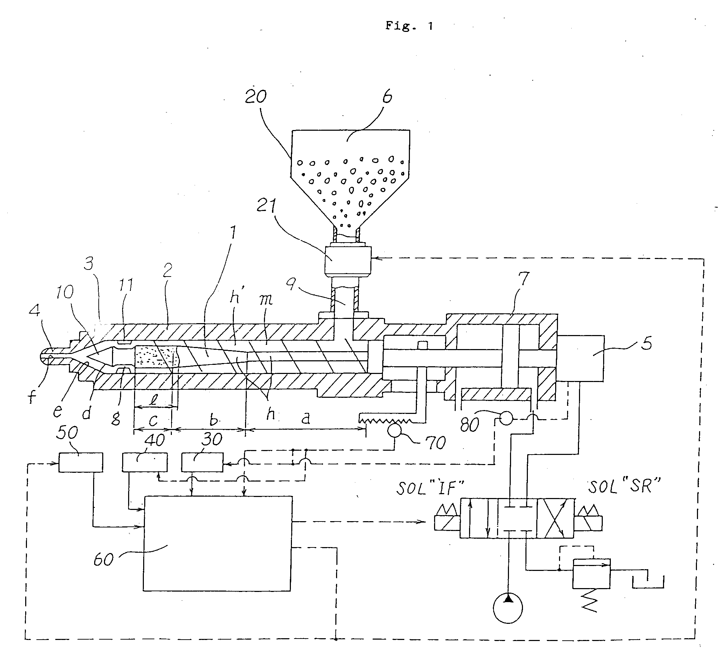

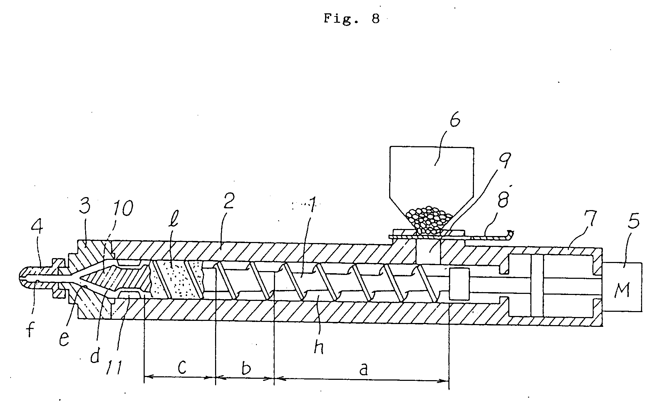

In one representative embodiment of the present invention as applied to an injection molding machine in Fig. 1, reference numeral 1 designates a screw, numeral 2 designates a cylinder, numeral 3 designates an end cap, numeral 4 designates an injection nozzle, numeral 5 designates a motor for rotating the screw 5, numeral 6 designates a hopper for feeding raw material resin, numeral 7 designates a hydraulic cylinder for injection, numeral 9 designates a raw material passageway, numeral 10 designates a torpedo, numeral 11 designates a check ring, and these component parts are equivalent to the corresponding component parts denoted by like reference numerals in the raw material feeding system in the prior art shown in Fig. 8.

Reference numeral 20 designates generally a raw material feeding system according to this preferred embodiment, and it is composed of the following component parts including the above-mentioned hopper 6 for feeding raw material resin and the raw material passageway 9.

Reference numeral 21 designates raw material resin selection means in the feeding system according to the present invention, and in this preferred embodiment, it is provided in the midway of the raw material passageway 9 communicating the hopper 6 for feeding raw material resin with the inside of the cylinder 2, and for instance, it consists of a shutter adapted to open and close the raw material passageway 9 in response to a command issued from a controller 60.

Reference numeral 30 designates color-change resin feed start detector means for determining whether or not a hollow space length has reached a predetermined amount, and for instance, it detects the fact that a number of revolution of the screw 1 counted by a well-known screw revolution number counter 80 has reached a preset screw revolution number and outputs a signal to the controller 60.

Reference numeral 40 designates discharge completion detector means for detecting whether or not a particular amount of filled resin has been discharged by repetition of injection, and this detector means which measures, for instance, a number of strokes of the screw 1 by means of a measuring instrument, and which outputs a signal to the controller 60 to switch to a normal operation when the measured number of strokes has been reached a preset number of strokes.

Reference numeral 50 designates color-change completion detector means, and this is detector means which outputs a signal to the controller 60 to switch to a normal operation when a number of times of filling of a particular amount of raw material resin has reached a preset number of times.

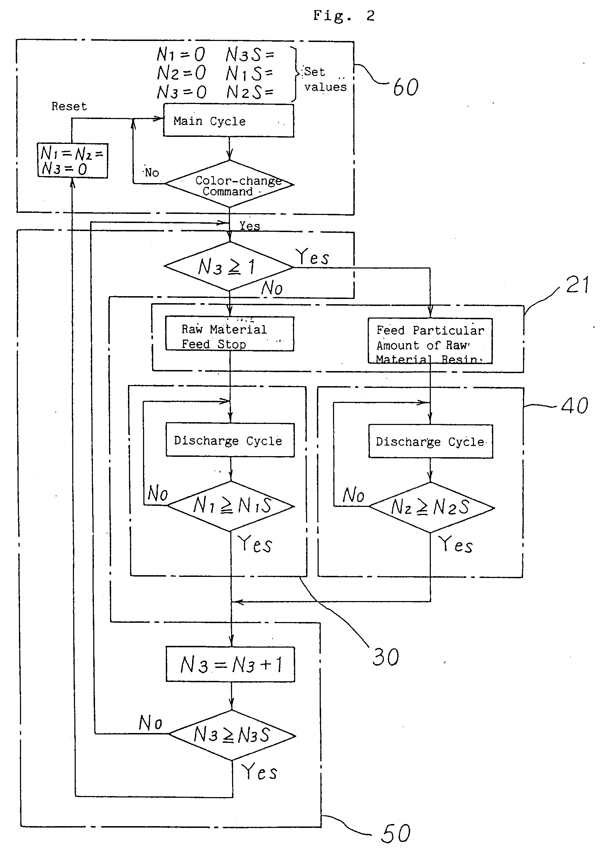

Fig. 2 shows a flow chart of operations in an injection molding machine having the raw material resin feeding system according to the above-described embodiment.

In this figure, symbol N₁ represents a number of revolutions of the screw, symbol N₂ represents a number of times of injection, symbol N₃ represents a number of times of feeding of a particular filling amount of raw material resin, symbols N_{1S}, N_{2S} and N_{3S} represent preset values for the respective numbers, which have the following meanings:
- N_{1S}: judgement standard for determining a feed start timing of resin to be changed in color, and it is either a set time or set value of a total revolution number of screw rotation.
- N_{2S}: determination standard for determining completion of discharge of a particular filling amount of raw material resin, and it is a set value of a number of times of injection.
- N_{3S}: a value serving as a standard value for detecting and judging completion of color-change, and it is a set value of a number of times of feeding of a particular filling amount of raw material resin.

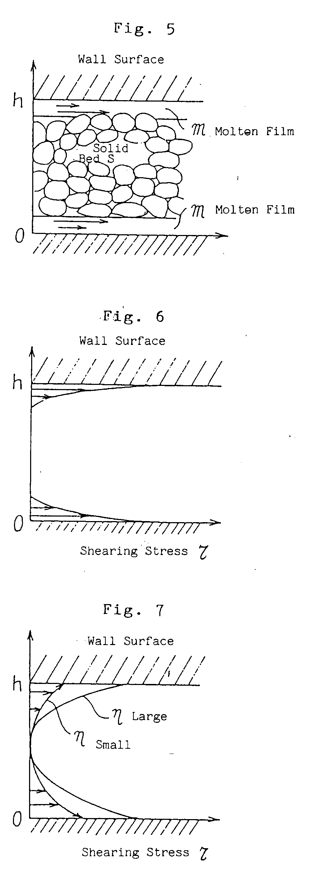

Now description will be made on the operation of the above-described system with reference to Figs. 1 and 2.
(1) If a color-change operation signal is output from a main cycle of the controller 60, raw material resin feed selection means 21 of the raw material resin feeding system 20 stops feeding of old raw material.
(2) Generally if an injection operation is continued while the feed of raw material is kept stopped, then resin within a raw material resin conveying channel space h′ formed by a screw channel m of the screw 1 and an inner wall surface of the cylinder 2 is reduced from the base portion of the screw 1 towards its tip end portion, and thereby a hollow space portion h (or a hunger portion) is formed and gradually grows up to the tip end portion.
   A flow of molten resin is checked by the check ring 11 provided at the tip end (on the side of the torpedo 10) of the screw 1, the above-described hollow space grows up to the position where an effective pushing force of the threads of the screw 1 acting upon the checked molten resin and a flow resistance of molten resin flowing through a gap space g formed between an inner wall surface of the check ring 11 and an outer wall surface of the screw 1 balance with each other, and at this position (this being called "hunger length" as measured from a feed port of resin) the growth of the hollow space is stopped and the so-called "residual resin" ℓ is formed.
   On the contact surfaces with the molten resin on the downstream side of the resin flow towards the nozzle 4 behind the residual resin ℓ, for instance, on the outer circumferential surface d of the torpedo 10, the inner wall surface e of the head cover 3, the inner wall surface of the nozzle 4 and the surface of a check ring gap clearance g, remains molten resin.
   In addition, due to the fact that in the compression section b of the screw 1, the bottom surface of the screw channel is inclined at an angle adapted to be flared toward the tip end, on the channel wall portion of this section is also found adhesion of a lot of resin.
   The most grown state or a state close to that state of the hollow space portion growing in the thread channel of the screw 1 after stoppage of raw material feed, can be known by preliminarily investigating time or a total number of revolutions of the screw by experiments or simulations. This is preset in time limit setting means or screw revolution number counting means, and is detected by the color-change resin feed start detector means 30.
(3) In response to an output from color-change resin feed start detector means 30, the controller 60 sends a raw material feed command to raw material resin feed selection means 21, and after the raw material resin feed selection means 21 has fed a particular amount of new raw material resin, it stops feed of raw material.
(4) Into the channel portion h under a hollow condition of the screw 1 is fed unmolten resin of an amount insufficient for filling the hollow space length, from the raw material passageway 9 towards the above-mentioned residual resin portion, this unmolten resin moves within the screw channel in the state of a solid bed S (See Fig. 5), hence an extremely large shearing force acts upon the surface of the screw channel (See Fig. 6) and performs scraping of a resin film in the compression section b of the screw to which a lot of old molten resin adhere.
   If revolution of the screw is further continued, the residual resin ℓ in the tip end portion of the screw 1 is pushed out to the side of the nozzle 4 through the check ring 11, also the raw material resin fed in a solid bed state also melts and is pushed out through the gap clearance g of the check ring 11, and at the same time the screw 1 would retreat due to a back pressure of the molten resin.
(5) When the screw 1 has retreated up to an injection position, the controller 60 stops rotation of the screw 1 and commands injection, and so, injection is carried out by making the screw 1 advance.
(6) Thereafter, this operation is repeated while feed of raw material is stopped. When the discharge of the previously filled old resin by injection has been completed and a particular amount of new molten resin is filled and injected, since for the resin conveyed through the hunger portion, shearing heat generation is less and an heater input is also made less than that upon continuous injection operation, resin having a high viscosity is injected, large shearing forces produced by highly viscous molten resin act upon the surfaces of the above-described resin staying portions d, e, f and g (See Fig. 7), and removal of a film of used resin proceeds owing to the scraping effect.
(7) In correspondence to the step where hollow space growth of the screw 1 caused by discharge of a particular amount of filled resin has reached saturation, a number of times of injection corresponding to the particular filled amount is preset, and by detecting the fact that the number of times of injection has reached this set value with particular filled amount discharge detector means 40 such as a counter, it is detected that the particular amount of filled resin has been discharged.
(8) Thereafter, the steps (3) to (6) above are repeated, and the fact that the number of repetitions has reached a set value, is detected by color-change completion detector means 50 such as a counter, then a color-change completion signal is sent to the controller 60, and thereafter, the operation transfers to a normal molding cycle forming the main cycle. Here, reference symbol η in Figs. 6 and 7 represents a viscosity and symbol τ represents a shearing stress.

It is to be noted that in the case where the present invention is applied to an extruder, in view of the fact that in an extruder the amount called "residual resin ℓ" is not present because the check ring is not provided, if a number of revolutions of a screw or time until a hollow space length reaches a predetermined length after stoppage of raw material feed is preliminarily determined, and if feed and discharge of the corresponding particular amount are carried out by the preset number of times, a similar effect to the above-described can be achieved.

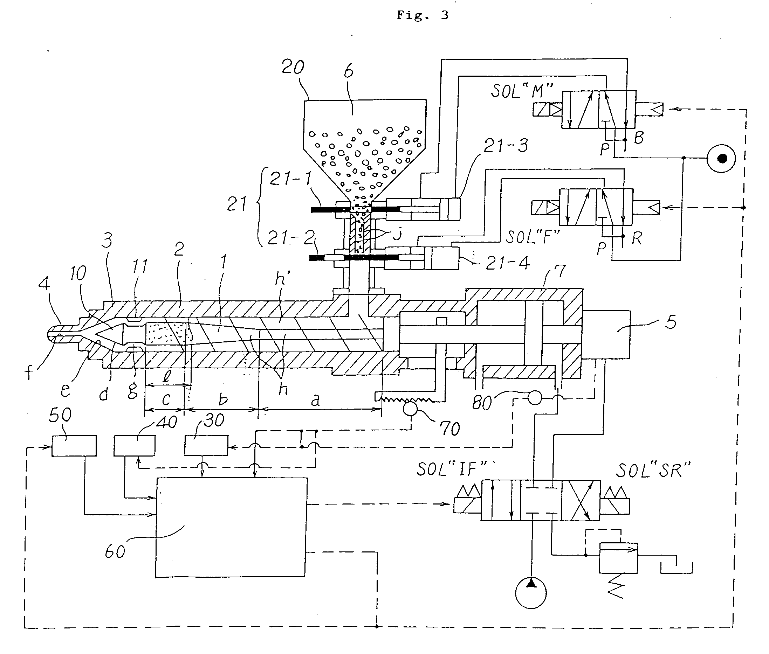

Now, with respect to a method for measuring a particular amount of fed resin upon color-change, explanation will be made in greater detail, by way of example, with reference a second preferred embodiment shown in Fig. 3.

In this example, the measurement is carried out by raw material resin feed selection means consisting of two shutters 21-1 and 21-2 provided at an interval in the midway of the raw material passageway 9 under the hopper 6 of the raw material feed means 20. At first the lower side shutter 21-2 is closed, and subsequently the upper side shutter 21-1 is opened. Then, the amount of raw material resin in the hopper 6 dropping through the raw material passageway 9 is always maintained at a constant height, and if the upper side shutter 21-1 is closed at this time, the amount j of raw material resin confined between the both shutters 21-1 and 21-2 becomes a particular amount.

Under this condition, if a raw material resin feed command is received, the lower side shutter 21-2 is opened, and a particular amount of raw material resin is fed to the feed section a of the screw 1.

If feed of raw material is completed (detection of this could be done by means of a photo-electric switch or the like), the lower side shutter 21-2 is closed, thereafter the upper side shutter 21-1 is opened, and if the number of times of feed at this time is equal to or less than a predetermined number of times of feed, the system could be held in a standby state while maintaining this measuring condition, and after a feed command has been issued from the controller 60, the upper side shutter 21-1 is closed and the above-described feeding operation of a particular amount is carried out.

On the other hand, in response to a continuous feed command, the both shutters 21-1 and 21-2 are held in an open state.

In an injection molding machine, if a particular feed amount is determined to be equivalent to a delivery amount during one injection and an injection cycle is carried out each time the particular amount is fed, then a color-change work proceedes under an optimum condition, and an amount of resin loss as well as a loss time caused by color-change would become minimum. Of course, this particular amount could be determined to be equivalent to an amount of a plurality of injections.

Regarding the start of injection by the screw, either an output of a potentiometer serving as retreated position detector means, or an output of timer means which starts time count when the screw has reached the end of advance after injection and outputs an ON signal after a predetermined period of time, is utilized, and in response to either one of the signals, injection is carried out. And, in the case where the particular amount is set at about the amount to be delivered by one injection, although there is a distribution of injection amounts over the respective injections, if the particular amount and the period of time are selected so that a viscosity upon injection may fall within a proper range, then the color-change operation would proceed without mechanical damage due to the color-change operation, and completion of color-change can be detected by counting a number of injections or a number of times of feeding of the particular amount, and comparing this with a preset value to make judgement.

Fig. 3 shows a second preferred embodiment of the present invention. In this figure, reference numeral 21-1 designates an upper side shutter, while numeral 21-2 designates a lower side shutter, and these shutters are provided in the midway of a raw material passageway 9 as spaced from each other. The respective shutters 21-1 and 21-2 are fixedly connected to piston rod ends of pneumatic cylinders 21-3 and 21-4 for respectively actuating the shutters.

A metering operation for a particular amount is as described already in connection to the first preferred embodiment. That is, as a result of the fact that the respective shutters 21-1 and 21-2 perform 2-position operations as actuated by the pneumatic cylinders 21-3 and 21-4, control is effected for either metering and intermittent feed or continuous feed. The control sequence is essentially the same as the flow chart in Fig. 2. Alternatively, the above-described 2-position operation could be done by making use of a rotary disc and rotary drive means for the same disc.

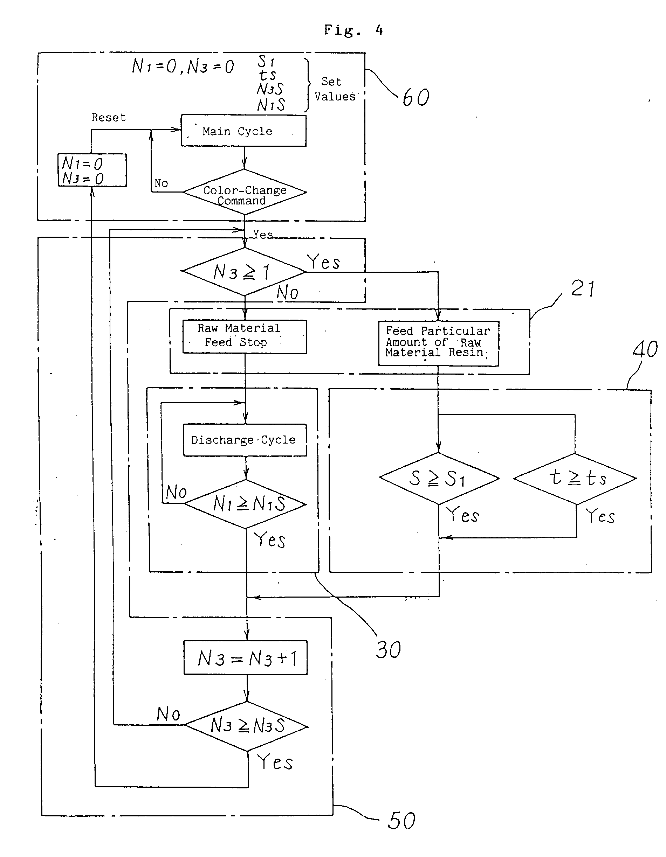

Fig. 4 is a flow chart representing an operation according to a third preferred embodiment of the present invention. In this case, a particular amount is made equivalent to a delivery amount upon one injection, and this is basically the same as the operation shown by the flow chart in Fig. 2 except for that detection for completion of discharge of a particular amount is effected by an output S of screw stroke detector means 70 (for instance, a potentiometer) or timer means which uses the time of last completion of discharge of a particular amount as a start point. In Fig. 4, reference symbol S₁ designates a set output serving as a standard of judgement for a screw stroke, and symbol tₛ designates a set time.

As will be apparent from the detailed description of preferred embodiments of the present invention, according to the present invention, since resin to be changed in color is fed to a screw little by little and thus color-change is effected always under the condition where a scraping effect by high viscosity resin is large, the following advantages are obtained:
(1) A necessary time for color-change is greatly shortened.
(2) An amount of resin consumed for color-change is reduced, and so, waste of material is decreased.
(3) Color-change and molding operations after color-change can be automated, and this results in improvements in productivity.

While a principle of the present invention has been described above in connection to preferred embodiments of the invention, it is intended that all matter contained in the above description and illustrated in the accompanying drawings shall be interpreted to be illustrative and not in a limiting sense.

## Claims

1. A raw material resin feeding system for a molding machine available in an injection molding machine or an extruder, in which raw material resin is fed to a feed section wherein upon carrying out a variable-color operation by making use of materials to be changed in color, resin feed start detector means (30) are provided for detecting a timing for starting feed of said a particular amount, discharge completion detector means (40) for detecting completion of discharge of the amount of raw material resin corresponding to the particular amount, and color change completion detector means (50), whereby raw material feed for quick color-change and raw material for normal operation can be selectively carried out,
characterized in that
raw marerial resin is intermittently fed to a feed section by intermittently opening and closing a resin passageway (9),
said system comprises raw material resin feed selection means (21) provided in the midway of said resin passageway (9) for selecting either one of "intermittent feed of a particular amount" and "continuous feed" with respect to feeding of raw material resin to a feed section,
said system comprises two passageway opening/closing means (21-1, 21-2) disposed at an interval along said resin passageway (9), and
a particular amount to be fed intermittently is determined by said two passageway opening/closing means (21-1, 21-2).

2. A raw material resin feeding system for a molding machine as claimed in Claim 1, characterized in that an intermittent feed amount per one time of said raw material resin feed selection means is an amount corresponding to one injection or a plurality of injections.

3. A raw material resin feeding system for a molding machine as claimed in any one of Claims 1 or 2, characterized in that said discharge completion detector means consists of either injection start position detector means or a combination of the same injection start position detector means and time limit setting means using as a start point a screw position after completion of injection.

4. A raw material resin feeding system for a molding machine as claimed in any one of Claims 1 to 3, characterized in that said color-change completion detector means consists of means for detecting a predetermined number of times of injection or a predetermined number of times of feeding of raw material resin.

## Patentansprüche

1. Rohkunststoffzufuhranlage für eine Formmaschine, wie sie in einer Spritzgießmaschine oder einem Extruder vorhanden ist, bei der bzw. dem Rohmaterialharz einer Speisesektion zugeführt wird, worin bei Durchführung einer Operation mit variabler Farbe bzw. Farbwechseloperation unter Verwendung von bezüglich der Farbe zu wechselnden Materialien ein Harzzuführstart-Detektormittel (30) zum Detektieren eines Zeitpunkts für Beginn der Zufuhr der/einer bestimmten Menge, ein Austragabschluß-Detektormittel (40) zum Detektieren des Abschlusses des Austragens der Rohmaterialharzmenge entsprechend der bestimmten Menge und ein Farbwechselabschluß-Detektormittel (50) vorgesehen sind, so daß Rohmaterialzufuhr für schnellen Farbwechsel und Rohmaterial(zufuhr) für Normalbetrieb selektiv durchführbar sind,
dadurch gekennzeichnet, daß
Rohmaterialharz intermittierend zu einer Zufuhr- oder Speisesektion durch intermittierendes Öffnen und Schließen eines Harzdurchgangs (9) zugeführt wird,
die Anlage ein im Mittelbereich des Harzdurchgangs (9) vorgesehenes Rohmaterialharzzzfuhr-Wählmittel (21) zum Wählen entweder einer "intermittierenden Zufuhr einer bestimmten Menge" oder einer "kontinuierlichen Zufuhr" bezüglich der Zufuhr von Rohmaterialharz zu einer Speisesektion aufweist,
die Anlage zwei in einem Abstand längs des Harzdurchgangs (9) angeordnete Durchgangsöffnungs/schließmittel (21-1, 21-2) enthält und
eine bestimmte, intermittierend zuzuführende Menge durch die beiden Durchgangsöffnungs/schließmittel (21-1, 21-2) bestimmt wird.

2. Rohkunststoffzufuhranlage für eine Formmaschine nach Anspruch 1, dadurch gekennzeichnet, daß eine intermittierende Zufuhrmenge für eine Zeiteinheit (per one time) des Rohmaterialharzzufuhr-Wählmittels eine Menge entsprechend einem Spritzschuß oder einer Anzahl von Spritzschüssen ist.

3. Rohkunststoffzufuhranlage für eine Formmaschine nach einem der Ansprüche 1 oder 2, dadurch gekennzeichnet, daß das Austragabschluß-Detektormittel entweder aus einem Spritzstartposition-Detektormittel oder einer Kombination aus dem gleichen Spritzstartposition-Detektormittel und einem Zeitgrenzeneinstellmittel, das als Ausgangspunkt eine Schneckenposition nach Abschluß des Spritzschusses nutzt, besteht.

4. Rohkunststoffzufuhranlage für eine Formmaschine nach einem der Ansprüche 1 bis 3, dadurch gekennzeichnet, daß das Farbwechselabschluß-Detektormittel aus einem Mittel zum Detektieren einer vorbestimmten Spritzschuß-Häufigkeitszahl oder einer vorbestimmten Häufigkeitszahl der Zufuhr von Rohmaterialharz besteht.

## Revendications

1. Système d'amenée de résine brute pour machine de moulage, disposé dans une machine de moulage par injection ou une extrudeuse dans laquelle la résine brute est amenée jusqu'à une section d'alimentation lorsqu'une opération de coloration variable est effectuée par utilisation de matières dont la couleur doit être modifiée, système dans lequel des moyens (30) de détection de début d'amenée de résine sont présents pour détecter le moment où commence le début de l'amenée d'une quantité particulière, des moyens (40) de détection d'achèvement de décharge de la quantité de résine brute correspondant à la quantité particulière, et des moyens (50) de détection d'achévement de modification de couleur, grâce à quoi l'amenée de matière brute pour un changement rapide de couleur et de la matière brute pour une opération normale peuvent être effectuées de façon sélective,
caractérisé en ce que :
la résine brute est amenée de façon intermittente jusqu'à une section d'alimentation par ouverture et fermeture de façon intermittente d'un passage (9) de résine,
ledit système comprend des moyens (21) de sélection d'amenée de résine brute présents dans la partie médiane du passage (9) pour sélectionner soit "une amenée intermittente d'une quantité particulière", soit " une amenée continue" en ce qui concerne l'amenée de résine brute jusqu'à la section d'alimentation,
ledit système comprend deux moyens (21-1, 21-2) d'ouverture/fermeture de passage disposés à un intervalle l'un de l'autre le long dudit passage (9) de résine, et
la quantité particulière devant être amenée de façon intermittente est déterminée par lesdits moyens (21-1, 21-2) d'ouverture/fermeture de passage.

2. Système d'amenée de résine brute pour machine de moulage selon la revendication 1, caractérisé en ce que la quantité amenée par intermittence pour chaque amenée desdits moyens de sélection d'amenée de résine brute est une quantité correspondant à une seule injection ou à une pluralité d'injections.

3. Système d'amenée de résine brute pour machine de moulage selon l'une quelconque des revendications 1 ou 2, caractérisé en ce que lesdits moyen de détection d'achèvement de décharge consistent soit en des moyens de détection de position de début d'injection, soit en une combinaison de ces moyens de détection de position de début d'injection et de moyens de réglage de limites de temps utilisant comme point de départ une position de la vis après l'achévement de l'injection.

4. Système d'amenée de résine brute pour machine de moulage selon l'une quelconque des revendications 1 à 3, caractérisé en ce que lesdits moyens de détection d'achèvement de changement de couleur consistent en des moyens pour détecter un nombre prédéterminé d'injections ou un nombre prédéterminé d'amenées de résine brute.
